# FASCICULE DE BREVET EUROPEEN

(11) **EP 2 109 964 B1**
(45) Date de publication et mention de la délivrance du brevet: **15.05.2013**
(21) Numéro de dépôt: 08761941.7
(22) Date de dépôt: 15.01.2008
(51) Int. Cl.: H04L 12/715, H04L 12/721, H04L 12/46

(54) **ASSEMBLAGE DE PAQUETS DANS UN RESEAU DE COMMUNICATION SUPPORTANT DES RESEAUX VIRTUELS**
PAKETERSTELLUNG IN EINEM KOMMUNIKATIONSNETZWERK MIT UNTERSTÜTZUNG VIRTUELLER NETZWERKE
PACKET ASSEMBLY IN A COMMUNICATION NETWORK SUPPORTING VIRTUAL NETWORKS

(30) Priorité: 19.01.2007 FR 0752782
(43) Date de publication de la demande: 21.10.2009
(73) Titulaire: FRANCE TELECOM, 75015 Paris (FR)
(72) Inventeur: NAKAJIMA, Hisao, F-22300 Lannion (FR)
(74) Mandataire: Regimbeau
(86) Numéro de dépôt international: PCT/FR2008/050070
(87) Numéro de publication internationale: WO 2008/107590

(56) Documents cités:
- US-A1- 2001 050 914
- US-A1- 2002 037 010
- US-A1- 2006 133 811
- MARCO LISTANTI ET AL: "Architectural and Technological Issues for Future Optical Internet Networks" IEEE COMMUNICATIONS MAGAZINE, IEEE SERVICE CENTER, PISCATAWAY, US, vol. 38, no. 9, septembre 2000 (2000-09), pages 82-92, XP011091347 ISSN: 0163-6804
- QIN Y ET AL: "Framework for dynamic optical virtual private networks (VPNs): architecture and analysis - Superhighways technology and broadband VPN" IEE PROCEEDINGS : COMMUNICATIONS, INSTITUTION OF ELECTRICAL ENGINEERS, GB, vol. 151, no. 1, 28 février 2004 (2004-02-28), pages 71-76, XP006021493 ISSN: 1350-2425
- CHUNMING QIAO: "Labeled Optical Burst Switching for lP-over-WDM lntegration" IEEE COMMUNICATIONS MAGAZINE, IEEE SERVICE CENTER, PISCATAWAY, US, vol. 38, no. 9, septembre 2000 (2000-09), pages 104-114, XP011091349 ISSN: 0163-6804 cité dans la demande

## Description

La présente invention concerne un assemblage de paquets à transmettre dans un réseau virtuel supporté par un réseau de communication comportant des noeuds par lesquels des paquets entrent et sortent du réseau de communication.

Plus particulièrement, elle a trait à une salve assemblant des paquets à transmettre dans un réseau privé virtuel VPN ("Virtual Private Network" en anglais) basé sur les ressources d'un réseau de communication à commutation de paquets optiques pour des connexions sécurisées entre des équipements clients comme des routeurs d'un réseau privé d'entreprise.

Des organismes internationaux en matière de télécommunications recommandent d'utiliser les ressources d'un réseau de communication du type réseau de transport internet ou ATM ("Asynchronous Transfer Mode" en anglais) pendant la durée de vie d'un réseau privé virtuel VPN. Les ressources du réseau de communication peuvent être partagées entre des réseaux virtuels VPN en utilisant le multiplexage à division du temps TDM ("Time Division Multiplexing" en anglais), par exemple selon le protocole SDH ("Synchronous Digital Hierarchy" en anglais). Selon une autre solution, les ressources du réseau de communication sont dédiées exclusivement à des réseaux virtuels VPN. Par exemple, des longueurs d'onde dans des liaisons au coeur du réseau de communication sont dédiées respectivement à des réseaux virtuels VPN et pendant les durées de vie de ces réseaux virtuels.

Un réseau virtuel VPN de niveau 1 est défini entre des interfaces de service se trouvant entre des équipements du côté des clients CE ("Customer Edge" en anglais) et des équipements du côté du réseau de communication PE ("Provider Edge" en anglais). Le réseau de communication géré par un opérateur P ("provider" en anglais) offrent à des réseaux privés virtuels VPN les ressources du réseau de communication permettant des connexions PE-P-PE. Ces ressources peuvent être une ou plusieurs longueurs d'onde, ou un ou plusieurs circuits virtuels selon le protocole SDH, dédiés à un réseau privé virtuel VPN pendant la durée de vie de celui-ci. Par ailleurs, un transfert multidiffusion est assuré par des connexions point-à-point multiples.

La granularité en matière de transport pour les réseaux virtuels VPN de niveau 1 peut être la granularité au niveau de la longueur d'onde en optique ou une plus fine granularité avec le multiplexage temporel TDM en électronique. La granularité dans le réseau de communication détermine la granularité du transport de réseaux VPN et le nombre maximum de réseaux VPN réalisables avec une longueur d'onde.

Des réseaux de communication OBS ("Optical Burst Switching" en anglais) basés sur une commutation de paquets optiques en mode salve, dite également paquet optique, assemblant des paquets IP sont actuellement étudiés selon l'article intitulé "Labeled Optical Burst Switching for IP-over-WDM Integration", Chunming Qiao, IEEE Communications Magazine, Sept. 2000, pages 104-114, l'article de Marco Listanti et al., "Architectural and Technological Issues for Future Optical Internet Networks", IEEE Communications Magazine, IEEE Service Center, Piscataway, US, vol. 38, no. 9, septembre 2000, pages 82-92, et l'article de Y. Qin et C.K. Siew: "Framework for dynamic optical virtual private networks (VPNs): architecture and analysis", IEE Proceedings : Communications, Institution of Electrian Engineers, GB, vol. 151, no.1, 28 février 2004, pages 71-76. Les réseaux OBS peuvent être considérés comme une version optique du réseau internet. Afin de bénéficier du mécanisme de multiplexage statistique, des paquets selon le protocole IP ("Internet Protocol" en anglais) sont assemblés en des salves optiques asynchrones ayant une longueur temporelle variable. Les ressources du réseau de communication, chemins et noeuds, ne sont dédiées que lorsqu'une salve doit traverser le réseau de communication.

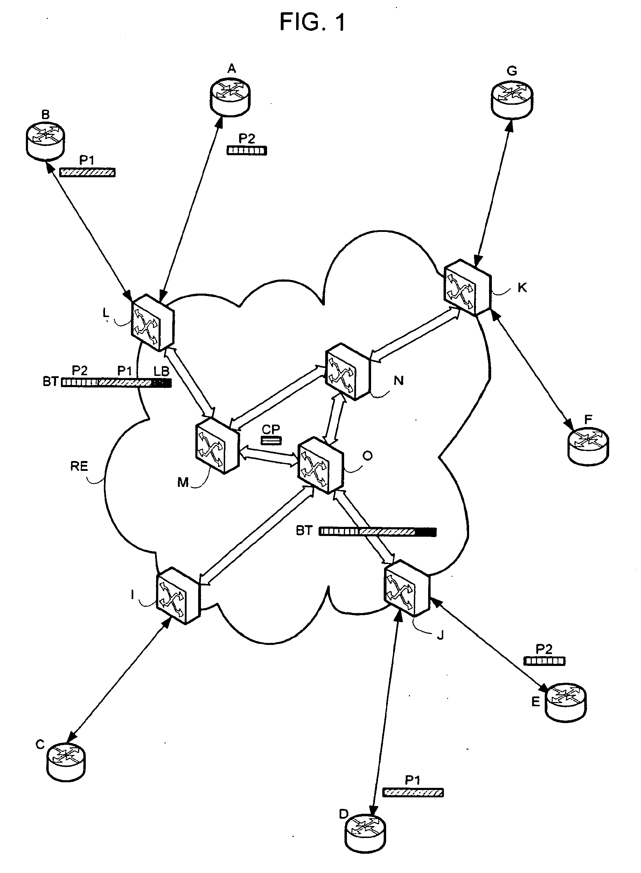

La figure 1 ci-annexée montre le principe de fonctionnement du plan de transfert d'un réseau de communication RE par commutation de paquets optiques en mode salve de type OBS pour deux réalisations selon lesquelles les ressources du réseau RE sont configurées en utilisant respectivement des étiquettes LB ("labels " en anglais) et des paquets de commande CP ("control packets" en anglais), dont le traitement est prévu dans le domaine électronique. Le réseau de communication RE est composé de noeuds de commutation d'entrée et de sortie I, J, K et L et de noeuds de commutation de coeur M, N et O à travers lesquels des salves optiques BT ("Bursts" en anglais) transitent. Ces noeuds sont interconnectés par des liens à fibre optique à multiplexage à division de longueur d'onde WDM ("Wavelength-Division Multiplexing" en anglais). Par exemple des paquets P1 et P2 provenant de routeurs A et B sont assemblés en une salve (P1, P2) de manière électronique dans le noeud d'entrée L avant de la convertir et l'émettre sous forme de salve optique dans le réseau RE, et la salve optique est convertie sous forme de salve électronique et désassemblée dans un noeud de sortie J en les paquets P1 et P2 acheminés vers des routeurs destinataires E et D.

Selon la première réalisation, une salve BT comprend en en-tête une étiquette LB dans laquelle des informations sur le contenu et le routage de la salve sont inscrites. L'étiquette LB sert à configurer des noeuds de coeur M et O intermédiaires sur le chemin pré-calculé, par exemple L-M-O-J, entre le noeud d'entrée L et le noeud de sortie J. Selon l'article précité de Marco Listanti et al., une étiquette MLPS ("MultiProtocol Label Switching" en anglais) en entête d'un paquet optique assemblant des paquets IP est modifiée à chaque transfert dans un noeud coeur entre des noeuds de source et de destination ("edge switches" en anglais) d'un réseau WDM.

Selon la deuxième réalisation, un paquet de commande CP est préalablement envoyé pour terminer la configuration de chaque noeud de coeur M, O sur le chemin afin d'y réserver un créneau temporel, c'est-à-dire un intervalle du temps nécessaire à la transmission de la salve (article précité de Y. Qin et C.K. Siew, paragraphe 3.2). Ensuite la salve (P1, P2) est transmise par le noeud d'entrée L sans attendre d'acquittement de la transmission du paquet de commande CP et traverse chaque noeud de coeur M, O jusqu'au noeud de sortie J.

L'invention ne recourt pas à des paquets de commande dans un réseau de communication par commutation de paquets optiques en mode salve de type OBS.

Par ailleurs, dans le cadre des recommandations internationales actuelles, il est prévu de construire des réseaux privés virtuels VPN ("Virtuel Private Network" en anglais) en recourant aux ressources d'un réseau de transport dédiées ou partagées ("Network Based VPN" en anglais). Un réseau privé virtuel VPN relie deux ou plusieurs réseaux locaux clients, par exemple des routeurs IP de ces réseaux locaux clients, échangeant de manière sécurisée des paquets IP ("Internet Protocol" en anglais) à travers l'internet ou un réseau de communication transportant des paquets IP (article précité de Y. Qin et C.K. Siew, chapitre 3).

Lorsque les ressources de connectivité du réseau de communication comme des longueurs d'onde sont dédiées aux réseaux virtuels VPN, au moins une longueur d'onde est dédiée à un réseau VPN pendant la durée du réseau VPN indépendamment des variations réelles du flux de paquets dans le réseau VPN. Ce mode de fonctionnement gaspille les ressources d'une part et limite à un faible nombre les réseaux VPN constructibles par longueur d'onde et par intervalle du temps d'autre part. Le nombre de réseaux VPN dépend du nombre de longueurs d'onde nécessaires et de la durée de chaque réseau VPN incluant les temps nécessaires à sa construction et sa destruction. Ces derniers temps avoisinent une seconde dans les meilleurs des cas.

Lorsque les ressources de transport des réseaux VPN sont partagées, les ressources établissant la connectivité du réseau de communication sont basées sur le multiplexage à division du temps TDM ("Time Division Multiplexing" en anglais), par exemple sur le protocole de transmission de données numériques à débit élevé SDH ("Synchronous Digital Hierarchy" en anglais), ou SONET aux États-Unis. Avec ce mode de fonctionnement, le produit débit par nombre de réseaux VPN est plafonné par le débit maximum supporté par une longueur d'onde. Un grand débit instantané ne peut pas être conjugué à un nombre élevé de réseaux VPN à la fois. Par ailleurs, le signal optique transporté doit obligatoirement être converti en un signal électronique à chaque noeud du réseau de communication pour bénéficier de ce fonctionnement.

Les réseaux VPN basés sur ces principes de fonctionnement ne permettent pas de concilier un grand débit instantané et un nombre élevé de réseaux VPN.

Pour remédier aux inconvénients évoqués ci-dessus, l'invention fournit une salve assemblant des paquets optiques à transmettre dans un réseau virtuel supporté par un réseau de communication du type à multiplexage à division de longueur d'onde, telle que caractérisée dans la revendication 1.

Selon l'invention, une salve est obtenue par un procédé d'assemblage de paquets optiques à transmettre dans un réseau virtuel supporté par un réseau de communication comportant des noeuds par lesquels des paquets optiques entrent et sortent du réseau de communication. Le procédé d'assemblage est tel que caractérisé dans la revendication 5.

Le fonctionnement du réseau de communication par multiplexage de salves de manière statistique et optique selon l'invention dans les premier et deuxième noeuds, dits noeuds d'entrée et de sortie, concilie un grand débit instantané et un nombre élevé de réseaux virtuels, comme au niveau électronique dans un routeur d'un réseau selon le protocole IP.

Le recours à la technique de multiplexage statistique comme dans des routeurs IP présente avantageusement une granularité en matière de transport pour les réseaux virtuels plus fine que la longueur d'onde tout en utilisant la granularité de lien à la longueur d'onde dans le réseau de communication sans recourir au multiplexage temporel TDM. Le multiplexage statistique absorbe avantageusement les diverses salves des équipements dans les réseaux locaux des clients et repose sur le trafic moyen de l'ensemble des réseaux locaux et non sur des trafics maxima des trafics demandés par les clients. Ceci lisse les variations des débits des équipements clients qui sont élevés pendant les salves et faibles entre des salves et optimise davantage l'occupation du réseau de communication en regroupant des paquets optiques reçus d'un client de réseau virtuel de type VPN dans des salves pouvant comprendre un nombre élevé de paquets optiques.

Dans le premier noeud par lequel des paquets sont aptes à entrer dans le réseau de communication, les premières informations contribuant à identifier le réseau virtuel pour chaque paquet reçu par le premier noeud peuvent être déduites du passage du paquet à travers une interface respective reliée au premier noeud. Cette interface fait office de frontière entre le réseau virtuel et le réseau de communication et les premières informations sont ainsi indépendantes d'une adresse de source dans les paquets. Les deuxièmes informations contribuant à identifier un chemin entre les premier et deuxième noeuds pour chaque paquet optique reçu par le premier noeud peuvent être déduites d'une adresse de destination, comme un préfixe de celle-ci, lue dans le paquet à assembler dans la salve. Les deuxièmes informations servent à sélectionner une adresse du deuxième noeud par lequel le paquet est apte à sortir du réseau de communication et ainsi un chemin entre les premier et deuxième noeuds préconfiguré dans des tables de routage des noeuds du réseau de communication.

Réciproquement, l'invention concerne aussi un procédé de désassemblage de paquets à transmettre dans un réseau virtuel supporté par un réseau de communication du type à multiplexage à division de longueur d'onde. Le procédé de désassemblage est tel que caractérisé revendication 9.

De manière à faciliter le désassemblage d'une salve reçue dans le deuxième noeud, le champ de paquet peut comprendre un premier sous-champ incluant le nombre de paquets inclus dans le champ de paquet et la longueur du champ de paquet. Chaque paquet dans le champ de paquet de la salve peut être précédé par un identificateur qui identifie une interface reliée au deuxième noeud par laquelle le paquet sort du réseau de communication et qui est déduit d'une adresse de destination dans le paquet ce qui dirige convenablement le paquet vers un équipement client destinataire. L'interface reliée au deuxième noeud est aussi à la frontière entre le réseau virtuel et le réseau de communication. Par exemple, l'identificateur d'interface précédant le paquet dans le champ de paquet de la salve est au moins une partie de l'adresse d'un équipement destinataire du paquet.

L'invention se rapporte également à des fonctions d'entrée de paquets par un noeud d'entrée et de sortie du réseau de communication comme ledit premier noeud, à un noeud de coeur et à des fonctions de sortie de paquets dans un noeud d'entrée et de sortie du réseau de communication comme ledit deuxième noeud.

Un noeud tel que ledit premier noeud par lequel des paquets à transmettre dans un réseau virtuel sont aptes à entrer dans un réseau de communication supportant le réseau virtuel.

Un noeud de coeur par lequel des paquets à transmettre dans un réseau virtuel sont aptes à transiter dans un réseau de communication supportant le réseau virtuel.

Un noeud tel que ledit deuxième noeud par lequel des paquets à transmettre dans un réseau virtuel sont aptes à sortir d'un réseau de communication supportant le réseau virtuel, est tel que caractérisé dans la revendication 13.

Enfin, l'invention se rapporte à des programmes d'ordinateur aptes à être mis en oeuvre dans les noeuds et comprenant des instructions qui, lorsque les programmes sont exécutés dans les noeuds, réalisent les étapes conformes aux procédés d'assemblage et désassemblage de paquets selon l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme d'un réseau de communication par commutation de salves optiques, de type OBS selon la technique antérieure ;
- la figure 2 est un bloc-diagramme d'un réseau de communication de type OBS dans lequel sont transférés selon l'invention des paquets depuis un premier équipement client d'un réseau privé virtuel vers deux équipements clients du réseau privé virtuel attachés à un noeud d'entrée et de sortie et des autres paquets depuis le premier équipement client vers un autre équipement client du réseau privé virtuel attaché à un autre noeud d'entrée et de sortie ;

- la figure 3 montre le format d'une salve avec divers champs selon l'invention ;
- la figure 4 montre des sous-champs dans un champ de paquet inclus dans la salve de la figure 3 ; et
- la figure 5 est un bloc-diagramme d'un réseau de communication de type OBS dans lequel sont transférés selon l'invention des paquets optiques depuis un équipement client d'un premier réseau privé virtuel et depuis un équipement client d'un deuxième réseau privé virtuel attachés à un noeud d'entrée et de sortie respectivement vers un autre équipement client du premier réseau privé virtuel et un autre équipement client du deuxième réseau privé virtuel attachés à un autre noeud d'entrée et de sortie.

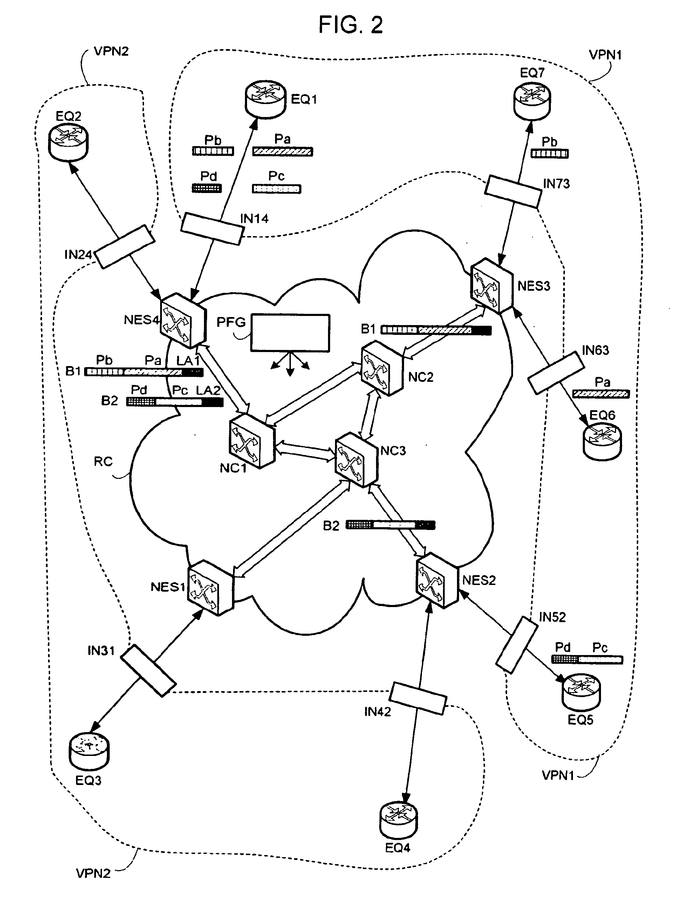

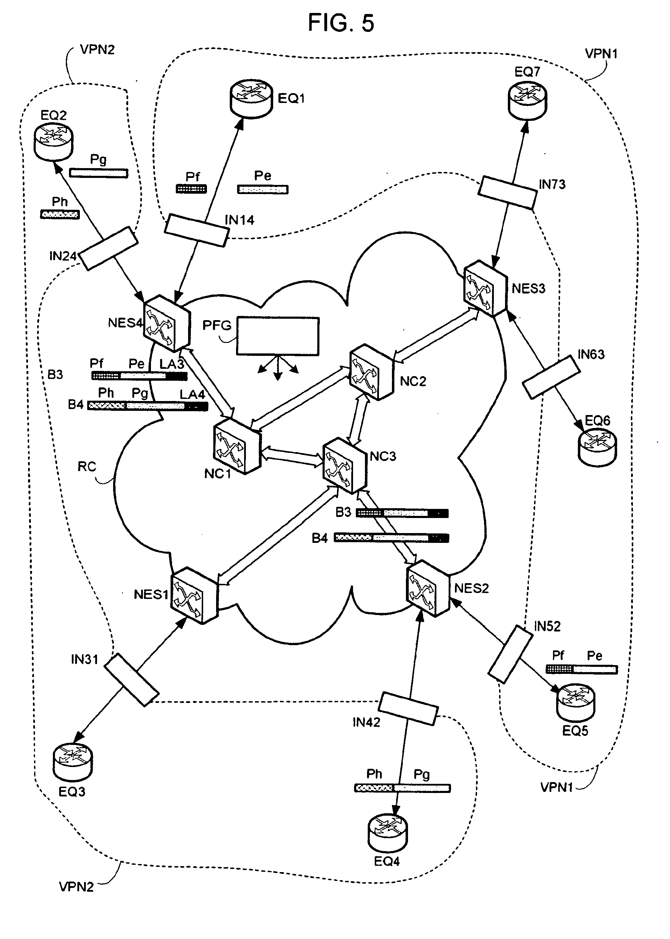

Dans les figures 2 et 5, on se réfère à une réalisation d'un réseau de communication RC de type OBS ("Optical Burst Switching" en anglais) basé sur une commutation de paquets optiques en mode salve, comprenant des noeuds d'entrée et de sortie NES1 à NES4 et des noeuds de coeur NC1 à NC3 et reliés à des équipements clients EQ1 à EQ7 tels que des routeurs de réseaux locaux. Les équipements clients EQ1 et EQ2 sont attachés au noeud NES4 via des interfaces d'entrée et de sortie IN14 et IN24. L'équipement client EQ3 est attaché au noeud NES1 via une interface d'entrée et de sortie IN31. Les équipements clients EQ4 et EQ5 sont attachés au noeud NES2 via des interfaces d'entrée et de sortie IN42 et IN52. Les équipements clients EQ6 et EQ7 sont attachés au noeud NES3 via des interfaces d'entrée et de sortie IN63 et IN73.

Les équipements EQ1, EQ5, EQ6 et EQ7 appartiennent à un premier réseau privé virtuel VPN1 ("Virtual Private Network" en anglais) délimité par les interfaces de communication IN41, IN52, IN63 et IN73 par rapport au réseau de communication RC. Les équipements EQ2, EQ3 et EQ4 appartiennent à un deuxième réseau privé virtuel VPN2 délimité par les interfaces IN24, IN31 et IN42 par rapport au réseau de communication RC.

Les liaisons entre les noeuds dans le réseau RC sont constituées essentiellement par des fibres optiques supportant un multiplexage à division de longueur d'onde WDM ("Wavelength-Division Multiplexing" en anglais). Dans les liaisons optiques entre les noeuds, une longueur d'onde n'est allouée qu'à un seul réseau privé virtuel, et un réseau privé virtuel peut occuper une ou plusieurs longueurs d'onde dans une liaison entre deux noeuds.

L'invention n'est pas limitée aux nombres ci-dessus de noeuds et d'équipements clients, aux nombres ci-dessus de réseaux privés virtuels et d'équipements clients par réseau privé virtuel et à l'architecture illustrée du réseau de communication RC.

Les noeuds d'entrée et de sortie NES1, NES2, NES3 et NES4 sont des passerelles entre les équipements clients et le réseau RC et disposent chacun d'interfaces connectées à des équipements clients appartenant à un même ou à différents réseaux virtuels VPN. Chaque noeud d'entrée et de sortie assemble des paquets P entrant dans le réseau RC et transmis par des équipements respectifs en des salves B ("bursts" en anglais) transmises vers des noeuds de coeur et désassemblent des salves transmises par des noeuds de coeur du réseau RC en des paquets sortant du réseau et transmis vers les équipements respectifs.

Ainsi par exemple, deux salves appartenant à un même réseau VPN peuvent traverser le réseau RC vers des noeuds de "sortie" différents, deux salves appartenant à un même réseau VPN peuvent suivre deux chemins différents pour arriver à un même noeud de "sortie", deux salves appartenant à deux réseaux VPN différents peuvent traverser le réseau RC vers un même noeud de "sortie" en empruntant un même chemin ou deux chemins différents, et deux paquets provenant d'une même interface "d'entrée" peuvent être destinés à un même noeud de "sortie" et sortir du réseau RC par deux interfaces différentes.

Pour pouvoir aiguiller les paquets et les salves selon notamment les exemples ci-dessus, un noeud d'entrée et de sortie donné du réseau OBS comprend les moyens suivants.

En tant que noeud d'entrée, le noeud d'entrée et de sortie donné comprend des moyens pour former une salve en entrée du réseau RC à partir de paquets optiques entrants à assembler en fonction d'un identificateur d'un réseau virtuel VPN indiquant l'appartenance du ou des équipements clients ayant transmis les paquet depuis le réseau VPN, et en fonction d'une adresse de destination lue dans les paquets et identifiant un noeud de sortie associé à un identificateur d'un chemin de transfert entre le noeud d'entrée et de sortie donné et ledit noeud de sortie, reconnaître l'interface d'entrée pour chaque paquet entrant par le noeud donné et donc l'appartenance de chaque paquet à un réseau VPN, et ainsi associer chaque salve formée à un réseau virtuel VPN auquel elle appartient et identifier le chemin de transfert à suivre pour chaque salve et la diriger vers un port de sortie du noeud donné. Eventuellement le noeud d'entrée et de sortie donné peut encore comprendre des moyens pour calculer des chemins possibles pour chaque paire comprenant le noeud donné et un noeud d'entrée et de sortie sortant des paquets appartenant à chaque réseau VPN desservi par le noeud donné, et éventuellement réserver les ressources pour chaque réseau VPN desservi par le noeud donné.

Des paquets optiques transitant dans un même réseau privé virtuel VPN et traversant en entrée et sortie du réseau RC des noeuds d'entrée et de sortie communs NES et donc pouvant suivre le même chemin de transfert dans le réseau RC sont assemblés dans le noeud "d'entrée" commun pour remplir un champ de paquet CP dans une salve B par exemple lorsque le nombre de tels paquets atteint un maximum prédéterminé pouvant dépendre du débit offert au réseau VPN, ou lorsqu'une période prédéterminée s'est écoulée depuis la réception du premier de tels paquets dans le noeud "d'entrée" commun.

En tant que noeud de sortie, le noeud d'entrée et de sortie donné comprend des moyens pour désassembler les salves transmises par un noeud coeur vers un port d'entrée du noeud donné en des paquets transférés à des interfaces de sortie IN d'un ou de plusieurs réseaux virtuels VPN et reconnaître l'appartenance de chaque salve reçue par le noeud donné à un réseau virtuel VPN; reconnaître l'interface de sortie pour chaque paquet sortant du noeud donné et donc l'appartenance du paquet sortant à un réseau virtuel VPN; faire correspondre des interfaces d'entrée et de sortie à un ou des réseaux VPN; et reconnaître l'attachement des interfaces d'entrée et de sortie aux noeuds d'entrée et de sortie.

Les noeuds de coeur NC1, NC2 et NC3, dits également noeuds de transit, stockent optiquement les salves pour les transférer en fonction d'informations de routage. Chaque noeud de coeur reconnaît l'appartenance d'une salve reçue à un réseau virtuel VPN respectif, reconnaît le chemin de transfert à suivre dans le réseau RC par la salve reçue, et assure un transfert de la salve reçue par un port d'entrée du noeud de coeur vers un port de sortie du noeud de coeur dirigé vers le prochain noeud suivant le chemin de transfert. Les transferts de salves dans un noeud de coeur se font donc de façon transparente.

Chaque noeud NES, NC du réseau RC contient ou possède les moyens d'accéder à une table de routage associant des couples d'identificateur ID_CH de chemin de transfert principal CH et d'identificateur ID_VPN de réseau virtuel VPN respectivement à des identificateurs de port d'entrée ID_PE et des identificateurs de port de sortie ID_PS de noeuds traversés par le chemin de transfert. L'identificateur ID_CH d'un chemin de transfert CH d'un réseau VPN suivi par une salve B transitant à travers des noeuds traversés par le chemin de transfert est associé aux identificateurs de port de sortie ID_PS des noeuds traversés afin de diriger dans chaque noeud traversé la salve vers le port de sortie PS relié au noeud suivant le chemin désigné par l'identificateur ID_CH associé à l'identificateur ID_VFN. La table de routage comprend également des identificateurs de port de sortie de secours associés à des identificateurs de chemins de secours et des identificateurs de chemins principaux, ainsi que d'autres paramètres relatifs à des caractéristiques des liaisons du réseau RC avec le noeud NES, NC.

La table de routage d'un noeud d'entrée et de sortie NES comprend en outre des identificateurs ID_IN des interfaces d'entrée et de sortie IN d'un ou de plusieurs réseaux VPN auxquelles le noeud NES est relié. Un identificateur ID_IN permet de transférer correctement des paquets vers un équipement destinataire relié à l'interface d'entrée et de sortie désignée par l'identificateur ID_IN en fonction de l'adresse de destination dans le paquet.

Le réseau de communication RC comprend selon la réalisation illustrée à la figure 2 une plate-forme de gestion PFG reliée aux noeuds soit par des liaisons de signalisation spécialisées, soit à travers des liaisons entre noeuds du réseau RC. La plate-forme de gestion gère une base de données des réseaux virtuels VPN dans laquelle sont centralisées des tables de routage des noeuds et qui sert à contrôler celles-ci. La plate-forme de gestion PFG détermine en outre des chemins possibles pour chaque paire de noeuds d'entrée et de sortie appartenant à chaque réseau VPN, réserve des ressources à chaque réseau VPN, configure des ressources du réseau RC en fonction des besoins des réseaux VPN, et amorce des procédures de sécurisation.

La base de données inclut des identificateurs ID_VPN des réseaux VPN, des identificateurs ID_CH de chemins principaux CH en association avec les identificateurs ID_VPN; des identificateurs de chemins de secours, des identificateurs ID__NES des noeuds d'entrée et de sortie NES en association avec des identificateurs ID_VPN et des identificateurs ID_CH; des identificateurs ID_IN des interfaces de sortie et d'entrée IN attachées à chaque noeud d'entrée et de sortie, ainsi que d'autres paramètres de ressources du réseau RC tels que indicateurs de qualité de service et bandes passantes des liaisons entre les noeuds du réseau RC.

Les informations stockées dans la base de données de la plate-forme de gestion sont régulièrement mises à jour et utilisées pour le routage des salves. Les tables de routage dans les noeuds NES et NC sont localement synchronisées régulièrement avec celles de la plate-forme de gestion PFG sous la commande de celle-ci. Le contenu de la base de données reflète l'ensemble des tables de routage dans les noeuds.

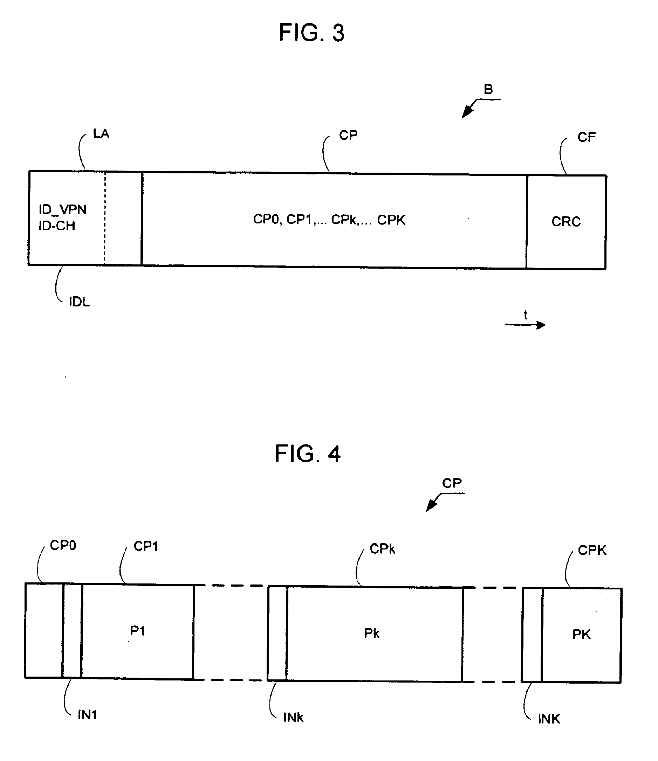

Comme montré à la figure 3, une salve B ("burst" en anglais) comprend trois champs successifs suivant le temps t: une étiquette LA ("label" en anglais) en entête, un champ de paquet CP et un champ de fin CF.

L'étiquette LA permet d'acheminer correctement la salve dans le réseau RC de type OBS, depuis un noeud d'entrée et de sortie NES vers un autre noeud d'entrée et de sortie. Pour cela, l'étiquette contient pour le routage de la salve B un champ d'identification IDL identifiant l'appartenance de la salve B à un réseau virtuel privé VPN et un chemin CH suivi par la salve B entre deux noeuds d'entrée et de sortie NES du réseau RC reliés à des interfaces du réseau virtuel. Le champ d'identification IDL inclut l'identificateur ID_VPN du réseau VPN auquel appartient la salve ou des premières informations sur cet identificateur du réseau VPN contribuant à identifier le réseau VPN, et un identificateur ID_CH du chemin principal CH suivi par la salve entre les deux noeuds d'entrée et de sortie correspondants du réseau VPN dans le réseau RC ou des deuxièmes informations sur cet identificateur du chemin principal CH contribuant à identifier le chemin.

La longueur de l'étiquette LA exprimée en octet est par exemple moins de 10 octets.

Optionnellement, le champ d'identification IDL inclut l'identificateur d'un deuxième chemin de secours pouvant être emprunté par la salve B, comme par exemple l'identificateur du chemin de secours NES4-NC1-NC3-NC2-NES3 pour une salve B1(LA1, Pa, Pb) dans la figure 2, lorsque le chemin principal NES4-NC1-NC2-NES3 devient indisponible ou défaillant.

L'étiquette peut encore comprendre d'autres informations comme un identificateur du prestataire du réseau VPN, un indicateur de qualité de service QoS, etc.

Lorsqu'une salve pénètre dans un noeud NES, NC du réseau RC, l'association entre l'identificateur de réseau virtuel ID_VPN et l'identificateur de chemin de transfert ID_CH dans le champ d'identification IDL de l'étiquette LA de la salve B est recherchée dans la table de routage du noeud NES, NC contrôlée par la plate-forme de gestion PFG afin d'en déduire un port de sortie vers le noeud suivant du chemin de transfert suivi par la salve B.

Le champ de paquet CP est destiné au transport de la charge utile ("pay-load" en anglais) comportant un ou plusieurs paquets assemblés P1 à PK a priori de différentes longueurs, et des informations sur l'organisation du champ de paquet et sur le routage de chaque paquet inclus dans le champ de paquet.

Comme montré à la figure 4, le champ de paquet CP comprend un premier sous-champ CPO et K sous-champs de paquet CP1 à CPK.

Le premier sous-champ CPO contient des informations sur la charge utile, par exemple un indicateur de début du champ de paquet CP, le nombre K de paquets transportés par la salve B, avec 1 ≤ K, et la longueur totale du champ de paquet CP par exemple exprimée en octet. La longueur du sous-champ CPO exprimée en octet est par exemple de 4 octets.

Les K sous-champs de paquet CP1 à CPK sont dédiés au transport de paquets. Un sous-champ de paquet CPk, avec 1 ≤ k ≤ K, inclut un paquet Pk et devant celui-ci un identificateur INk identifiant l'interface d'entrée et de sortie IN par laquelle le paquet Pk sort du réseau de communication RC pour entrer dans le réseau virtuel associé VPN et déduit d'une adresse de destination dans le paquet Pk. Le sous-champ de paquet CPk peut inclure par exemple l'identificateur de l'interface d'entrée et de sortie IN par laquelle le paquet Pk entre dans le réseau de communication RC et sort du réseau virtuel associé VPN. L'identificateur INk précédant le paquet Pk est, par exemple, une partie préfixe de l'adresse IP de l'équipement destinataire du paquet Pk ou du noeud d'entrée et de sortie NES par lequel le paquet Pk sort du réseau de communication RC. Les identificateurs IN1 à INK servent à transférer les paquets P1 à PK aux interfaces d'entrée et de sortie respectives reliées aux équipements clients EQ auxquels les paquets P1 à PK sont destinés, après le désassemblage de la salve B dans le noeud d'entrée et de sortie NES d'où sortent les paquets P1 à PK. La longueur des identificateurs d'interface d'entrée et de sortie IN1 à INK est par exemple de 1 ou 2 octets.

Le champ de fin CF délimite la fin de la salve B. Il peut contenir un code à redondance cyclique CRC ("Cyclic Redundancy Check" en anglais) résultant d'une fonction appliquée sur au moins le champ de paquet CP précédent.

En revenant à la figure 2, le réseau privé virtuel VPN1 transfère des paquets Pa et Pb d'un équipement client EQ1 vers deux autres équipements clients EQ6 et EQ7 attachés à un même noeud d'entrée et de sortie NES3 relié au réseau privé virtuel VPN1 et retransmettant les paquets dans le réseau de communication RC.

Dans le réseau VPN1, l'identificateur d'un chemin de transfert du noeud NES4 vers le noeud NES3 par exemple à travers les noeuds de coeur NC1 et NC2 est déjà mémorisé dans les tables de routage des noeuds précités pour transférer les paquets Pa et Pb de l'équipement EQ1 respectivement vers les équipements EQ6 et EQ7 via le réseau RC. A l'entrée du réseau au noeud NES4, les paquets Pa et Pb transmis par l'équipement client EQ1 via l'interface IN14 sont orientés en fonction de l'identificateur de l'interface d'entrée et de sortie IN14 traversée par les paquets Pa et Pb et des adresses de destination lues dans les paquets Pa et Pb. L'identificateur de l'interface IN14 permet de déduire des premières informations contribuant à identifier le réseau virtuel VPN1 comme l'identificateur ID_VPN du réseau VPN1. Les adresses de destination lues dans les paquets permettent de déduire des deuxièmes informations contribuant à identifier un chemin NES4-NC1-NC2-NES3 entre les noeuds NES4 et NES3 comme un identificateur de chemin ID-CH lié à des identificateurs des noeuds d'entrée et de sortie NES4 et NES3 ou des interfaces d'entrée et de sortie IN63 et IN73 à travers lesquels doivent sortir les paquets Pa et Pb.

Si les identificateurs des noeuds d'entrée et de sortie par lesquels doivent sortir les paquets Pa et Pb sont identiques, par exemple à l'identificateur du noeud NES3 selon la figure 2, et donc si les identificateurs des chemins à suivre par les paquets Pa et Pb sont identiques, les paquets Pa et Pb sont assemblés dans un champ de paquet CP d'une salve commune B1 construite par le noeud NES4 selon les figures 3 et 4. L'identificateur de l'interface de "sortie" respective IN63, IN73 de chaque paquet Pa, Pb est introduit devant le paquet dans le champ de paquet CP par le noeud NES4. Le noeud NES4 ajoute une étiquette LA1 en en-tête de la salve B1. Dans l'étiquette LA1, le noeuds NES4 inscrit l'identificateur ID_VPN du réseau VPN1 et des informations de routage telles qu'un identificateur ID_CH du chemin de transfert CH = NES4-NC1-NC2-NES3. Le noeud NES4 insère la salve B1(LA1, Pa, Pb) après une conversion en signal optique dans le trafic du réseau RC depuis le noeud NES4 vers le noeud de coeur NC1.

A la réception de la salve B1(LA1, Pa, Pb) au noeud de coeur NC1, la salve est stockée optiquement par exemple dans une fibre optique ou une mémoire RAM optique. La salve est stockée pour que dans le noeud de coeur NC1 l'étiquette LA1 soit lue électroniquement et la table de routage soit consultée jusqu'à y trouver une association de l'identificateur du réseau virtuel VPN1 et l'identificateur du chemin de transfert NES4-NC1-NC2-NES3 lus dans l'étiquette LA1. La table de routage du noeud NC1 fait correspondre cette association d'identificateurs à l'identificateur ID_PS d'un port de sortie du noeud NC1 dirigé vers le prochain noeud NC2 suivant le chemin de transfert CH = NES4-NC1-NC2-NES3 de manière à transférer la salve B1 vers ce port de sortie et l'insérer dans le trafic vers le prochain noeud NC2.

Le prochain noeud NC2, qui est un noeud de coeur, effectue un stockage de la salve B1, une lecture électronique de l'étiquette LA1, une consultation de table de routage et une recherche d'une correspondance entre les identificateurs de réseau virtuel et de chemin de transfert associés lus dans l'étiquette LA1 et l'identificateur d'un port de sortie du noeud NC2 dirigé vers le prochain noeud NES3, d'une manière similaire à ceux dans le noeud NC1, pour insérer la salve B1 dans le trafic du réseau RC depuis le noeud NC2 vers le noeud suivant NES3.

Le noeud NES3 désassemble la salve B1 en les paquets Pa et Pb et lit électroniquement dans la salve B1 en particulier le champ d'identification IDL de l'étiquette LA1, le nombre de paquets transportés et la longueur totale du champ de paquet CP inclus dans le sous-champ CPO de la salve B1, et les identificateurs des interfaces d'entrée et de sortie IN63, IN73. Ces derniers identificateurs d'interface sont retrouvés dans la table de routage du noeuds NES3 en association avec l'identificateur ID_VPN du réseau VPN1 lu dans l'étiquette LA1. Les paquets Pa et Pb sont transférés respectivement vers les équipements EQ6 et EQ7 via les interfaces IN63 et IN73 dont les identificateurs ont été retrouvés.

Ainsi les opérations d'assemblage et de désassemblage de paquets, dites également agrégation et désagrégation, dans les noeuds d'entrée et de sortie NES4 et NES3 et de lecture d'étiquette dans les noeuds se font dans le domaine électronique. Dans les noeuds de coeur, la salve B1 reste dans le domaine optique.

Encore en référence à la figure 2, le réseau privé virtuel VPN1 transfère des paquets Pa et Pb d'un équipement client EQ1 vers deux autres équipements clients EQ6 et EQ7 attachés à un noeud commun NES3 appartenant au réseau VPN1 comme précédemment, et transfère également des paquets Pc et Pd de l'équipement client EQ1 vers un autre équipement client EQ5 attaché au noeud d'entrée et de sortie NES2 relié au réseau VPN1 et devant retransmettre les paquets Pc et Pd.

Dans le réseau privé virtuel VPN1, l'identificateur du chemin de transfert CH = NES4-NC1-NC2-NES3 et aussi l'identificateur d'un chemin de transfert CH = NES4-NC1-NC3-NES2 du noeud NES4 vers le noeuds NES2 par exemple à travers les noeuds de coeur NC1 et NC3 sont déjà mémorisés dans les tables de routage des noeuds précités pour transférer les paquets Pa et Pb de l'équipement EQ1 respectivement vers les équipements EQ6 et EQ7 et les paquets Pc et Pd de l'équipement EQ1 vers l'équipement EQ5 via le réseau RC. A la réception de ces paquets, la table de routage du noeud NES4 est consultée pour associer aux quatre paquets Pa, Pb, Pc et Pd l'identificateur de l'interface d'entrée et de sortie IN14 traversée par ces paquets et donc l'identificateur du réseau virtuel VPN1, et en fonction des adresses de destination lues dans les paquets pour associer aux paquets Pa et Pb des identificateurs d'interfaces d'entrée et de sortie respectives IN63 et IN73 et aux paquets Pc et Pd des identificateurs d'interfaces d'entrée et de sortie respectives IN52.

Puisque les interfaces d'entrée et de sortie respectives IN63 et IN73 sont reliées à un noeud d'entrée et de sortie commun NES3, les paquets Pa et Pb empruntent le même chemin de transfert CH = NES4-NC1-NC2-NES3 et sont assemblés dans une salve commune B1 construite par le noeud NES4 et ayant une étiquette LA1 incluant l'identificateur ID_VPN du réseau VPN1 et l'identificateur ID_CH du chemin de transfert précité. De même, puisque l'équipement client EQ5 est destinataire à la fois des paquets Pc et Pd et est relié au noeud d'entrée et de sortie NES2 via l'interface d'entrée et de sortie IN52, les paquets Pc et Pd empruntent le même chemin de transfert CH = NES4-NC1-NC3-NES2 et sont assemblés dans une salve commune B2 construite par le noeud NES4 et ayant une étiquette LA2 incluant l'identificateur ID_VPN du réseau VPN1 et l'identificateur ID_CH du chemin de transfert précité. La table de routage du noeud NES4 fait correspondre l'association d'identificateurs du réseau VPN1 et du chemin NES4-NC1-NC2-NES3 à l'identificateur d'un port de sortie du noeud NES4 dirigé vers le prochain noeud NC1 de manière à transférer la salve B1 vers ce port de sortie et l'insérer dans le trafic vers le prochain noeud NC1. De même, la table de routage du noeud NES4 fait correspondre l'association d'identificateurs du réseau VPN1 et du chemin NES4-NC1-NC3-NES2 à l'identificateur du port de sortie précédent ou d'un autre port de sortie du noeud NES4 dirigé vers le prochain noeud NC1 de manière à transférer la salve B2 vers ce port de sortie et l'insérer dans le trafic vers le prochain noeud NC1.

Les deux salves B1(LA1, Pa, Pb) et B2(LA2, Pc, Pd) sont stockées optiquement dans le noeud de coeur NC1 qui lit électroniquement les étiquettes LA1 et LA2. Si dans la table de routage du noeud NC1 est trouvée l'association de l'identificateur du réseau virtuel VPN1 et l'identificateur du chemin de transfert NES4-NC1-NC2-NES3 lus dans l'étiquette LA1, la salve B1 est dirigée vers un port de sortie du noeud NC1 qui est relié au prochain noeud NC2 suivant le chemin de transfert NES4-NC1-NC2-NES3. Si dans la table de routage du noeud NC1 est trouvée l'association de l'identificateur du réseau virtuel VPN1 et l'identificateur du chemin de transfert NES4-NC1-NC3-NES2 lus dans l'étiquette LA2, la salve B2 est dirigée vers un port de sortie du noeud NC1 qui est relié au prochain noeud NC3 suivant le chemin de transfert NES4-NC1-NC3-NES2.

Puis les prochains noeuds NC2 et NC3 insèrent respectivement la salve B1 dans le trafic du réseau RC vers le noeud suivant NES3 suivant le chemin de transfert NES4-NC1-NC2-NES3 et la salve B2 dans le trafic du réseau RC vers le noeud suivant NES2 suivant le chemin de transfert NES4-NC1-NC3-NES2, d'une manière similaire aux stockage de salve, lecture électronique d'étiquette, consultation de table de routage et recherche de correspondance entre identificateurs de réseau virtuel et de chemin de transfert lus et un identificateur de port de sortie décrits précédemment pour la salve B1.

Le noeud NES3 désassemble la salve B1 en les paquets Pa et Pb pour les transférer respectivement vers les équipements EQ6 et EQ7 via les interfaces IN63 et IN73 dont les identificateurs sont extraits du champ CP de la salve B1, comme précédemment. Le noeud NES2 désassemble la salve B2 en les paquets Pc et Pd et lit électroniquement dans la salve B2 le champ d'identification IDL de l'étiquette LA2, le sous-champ CPO et les identificateurs d'interface d'entrée et de sortie IN52. Ces derniers identificateurs d'interface sont retrouvés dans la table de routage du noeud NES2 en association avec l'identificateur du réseau VPN1 extrait de l'étiquette LA2. Les paquets Pc et Pd sont transférés vers l'équipement EQ5 via l'interface IN52.

En se référant maintenant à la figure 5, le noeud d'entrée et de sortie NES4 reçoit des paquets Pe et Pf et des paquets Pg et Ph respectivement d'équipements clients EQ1 et EQ2 appartenant à deux réseaux privés virtuels différents VPN1 et VPN2, et un seul noeud d'entrée et de sortie NES2 distribue les paquets Pe et Pf vers un équipement client destinataire EQ5 appartenant au réseau VPN1 et les paquets Pg et Ph vers un équipement client destinataire EQ4 appartenant au réseau VPN2.

On suppose que les quatre paquets Pe, Pf, Pg et Ph empruntent un chemin de transfert commun CH = NES4-NC1-NC3-NES2 dans le réseau RC entre les noeuds d'entrée et de sortie NES4 et NES2, bien qu'en variante les paquets Pe et Pf dans une salve et les paquets Pg et Ph dans une autre salve peuvent emprunter des chemins de transfert différents entre les noeuds NES4 et NES2. Dans les réseaux privés virtuels VPN1 et VPN2, l'identificateur d'un chemin de transfert du noeud NES4 vers le noeud NES2 par exemple à travers les noeuds de coeur NC1 et NC3 est déjà mémorisé dans les tables de routage des noeuds précités pour transférer les paquets Pe, Pf, Pg et Ph des équipements EQ1 et EQ2 respectivement vers les équipements EQ5 et EQ4 via le réseau RC.

A l'entrée du réseau au noeud NES4, les paquets Pe et Pf transmis par l'équipement client EQ1 via l'interface d'entrée et de sortie IN14 sont orientés en fonction de l'identificateur de l'interface IN14 traversée par les paquets Pe et Pf ce qui identifie le réseau VPN1, et en fonction des adresses de destination lues dans les paquets Pe et Pf ce qui identifie un noeud de "sortie" NES2 et une interface de "sortie" IN52 à travers lesquels les paquets Pe et Pf doivent sortir. De même, les paquets Pg et Ph transmis par l'équipement client EQ2 via l'interface d'entrée et de sortie IN24 sont orientés en fonction de l'identificateur de l'interface IN24 traversée par les paquets Pg et Ph ce qui identifie le réseau VPN2, et en fonction des adresses de destination lues dans les paquets Pg et Ph ce qui identifie un noeud de "sortie" NES2 et une interface de "sortie" IN42 à travers lesquels les paquets Pg et Ph doivent sortir.

Les paquets Pe et Pf étant dirigés vers un équipement client destinataire commun EQ5 dans le réseau VPN1, les paquets Pe et Pf empruntent le même chemin de transfert CH = NES4-NC1-NC3-NES2 et sont assemblés dans une salve commune B3 construite par le noeud NES4. De même, les paquets Pg et Ph étant dirigés vers un équipement client destinataire commun EQ4 dans le réseau VPN2, les paquets Pe et Pf empruntent le même chemin de transfert CH = NES4-NC1-NC3-NES2 et sont assemblés dans une salve commune B4 construite par le noeud NES4. Les salves B3 et B4 ont des étiquettes LA3 et LA4 incluant respectivement les identificateurs des réseaux privés virtuels VPN1 et VPN2 et ayant en commun l'identificateur du chemin de transfert précité NES4-NC1-NC3-NES2. La table de routage du noeud NES4 fait correspondre l'association d'identificateurs du réseau VPN1 et du chemin NES4-NC1-NC3-NES2 à l'identificateur d'un port de sortie dirigé vers le prochain noeud NC1 de manière à transférer la salve B3 vers ce port de sortie et l'insérer dans le trafic vers le noeud NC1, et fait correspondre l'association d'identificateurs du réseau VPN2 et du chemin NES4-NC1-NC3-NES2 à l'identificateur du port de sortie précédent ou d'un autre port de sortie dirigé vers le prochain noeud NC1 de manière à transférer la salve B4 vers ce port de sortie et l'insérer dans le trafic vers le noeud NC1. Le noeud NES4 détermine l'ordre et les instants de transfert des salves B3 et B4 pour éviter des collisions dans le trafic vers le noeud de coeur NC1.

Puis les prochains noeuds NC1 et NC3 insèrent les salve B3 (LA3, Pe, Pf) et B4 (LA4, Pg, Ph) dans le trafic du réseau RC vers les noeuds respectifs suivants NC3 et NES2 suivant le chemin de transfert NES4-NC1-NC3-NES2 d'une manière similaire au stockage de salve, à la lecture électronique d'étiquette, à la consultation de table de routage et à la recherche de correspondance entre identificateurs de réseau virtuel et de chemin de transfert lus et un identificateur de port de sortie décrits précédemment pour la salve B1 dans les noeuds de coeur NC1 et NC2.

Le noeud NES2 désassemble la salve B3 en les paquets Pe et Pf et lit électroniquement dans la salve B3 le champ d'identification IDL de l'étiquette LA3, le sous-champ CPO et l'identificateur d'interface d'entrée et de sortie IN52 devant les paquets Pe et Pf afin de retrouver cet identificateur d'interface dans la table de routage du noeud NES2 en association avec l'identificateur du réseau VPN1 extrait de l'étiquette LA3 et transférer les paquets Pe et Pf vers l'équipement EQ5 via l'interface IN52. Egalement le noeud NES2 désassemble la salve B4 en les paquets Pg et Ph et lit électroniquement dans la salve B4 le champ d'identification IDL de l'étiquette LA4, le sous-champ CPO et l'identificateur d'interface d'entrée et de sortie IN42 devant les paquets Pg et Ph afin de retrouver cet identificateur d'interface dans la table de routage du noeud NES2 en association avec l'identificateur du réseau VPN2 extrait de l'étiquette LA4 et transférer les paquets Pg et Ph vers l'équipement EQ4 via l'interface IN42.

Selon des variantes de salve selon l'invention, à la place de l'identificateur ID_CH d'un chemin CH dans le champ d'identification IDL de l'étiquette LA d'une salve B ou en complément de l'identificateur ID_CH, un noeud d'entrée et de sortie NES recevant des paquets P d'un réseau virtuel introduit des informations contribuant à identifier le chemin à suivre par la salve assemblant les paquets reçus, comme l'identificateur ID_IN d'une interface d'entrée et de sortie IN devant entrer un paquet P à introduire dans la salve B, l'identificateur ID_IN d'une interface d'entrée et de sortie IN devant sortir un paquet P extrait de la salve B, l'adresse d'un noeud d'entrée et de sortie desservant l'interface d'entrée et de sortie IN devant entrer un paquet P à introduire dans la salve B, ou l'adresse d'un noeud d'entrée et de sortie desservant l'interface d'entrée et de sortie IN devant sortir un paquet P extrait de la salve B. Les tables de routage dans les noeuds NES et NC et dans la plate-forme de gestion PFG sont alors modifiées en conséquence.

Selon une autre réalisation, le contrôle des taples de routage dans les noeuds NES et NC du réseau RC n'est plus centralisé dans une plate-forme de gestion FFG, mais est distribué dans les noeuds NES et NC selon un plan de commande des noeuds.

L'invention décrite ici concerne une salve assemblant des paquets, un procédé d'assemblage de paquets à transmettre dans un réseau virtuel supporté par un réseau de communication, un noeud tel que le noeud NES4 par lequel des paquets Pa et Pb à transmettre dans un réseau virtuel VPN1 sont aptes à entrer dans un réseau de communication RC supportant le réseau virtuel, un noeud de coeur tel que le noeud NC1, NC2 par lequel des paquets Pa et Pb à transmettre dans un réseau virtuel VPN1 sont aptes à transiter dans un réseau de communication RC supportant le réseau virtuel VPN1, et un noeud tel que le noeud NES3 par lequel des paquets Pa et Pb à transmettre dans un réseau virtuel VPN1 sont aptes à sortir d'un réseau de communication RC supportant le réseau virtuel. Selon une implémentation, les étapes du procédé de l'invention sont déterminées par des instructions de programmes d'ordinateur incorporés respectivement dans lesdits noeuds. Les programmes comportent des instructions de programme qui, lorsque lesdits programmes sont exécutés dans lesdits noeuds dont le fonctionnement est alors commandé par l'exécution des programmes, réalisent les étapes du procédé selon l'invention.

En conséquence, l'invention s'applique également à des programmes d'ordinateur, notamment des programmes d'ordinateur enregistrés sur ou dans un ou plusieurs supports d'enregistrement lisibles par un ordinateur et tout dispositif de traitements de données, adapté à mettre en oeuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Un support d'enregistrement peut être n'importe quelle entité ou dispositif capable de stocker un programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

## Revendications

1. - Salve (B1) assemblant des paquets optiques (Pa, Pb) à transmettre dans un réseau virtuel (VPN1) supporté par un réseau de communication (RC) du type à multiplexage à division de longueur d'onde, **caractérisée en ce qu'**elle comprend une étiquette (LA1) précédant un champ de paquet (CP) assemblant des paquets optiques (Pa, Pb) provenant du réseau virtuel et aptes à entrer dans le réseau de communication par un premier noeud (NES4) et à sortir du réseau de communication par un deuxième noeud (NES3), ladite étiquette incluant des premières informations (ID_VPN) contribuant à identifier le réseau virtuel et des deuxièmes informations (ID_CH) contribuant à identifier un chemin (NES4-NC1-NC2-NES3) entre les premier et deuxième noeuds, les premières et deuxièmes informations étant inchangées pendant la traversée entre les premier et deuxième noeuds du réseau de communication par la salve.

2. - Salve conforme à la revendication 1, dans laquelle le champ de paquet comprend un premier sous-champ (CPO) incluant le nombre de paquets optiques inclus dans le champ de paquet (CP) et la longueur du champ de paquet.

3. - Salve conforme à la revendication 2, dans laquelle chaque paquet optique (Pk) dans le champ de paquet (CP) est précédé par un identificateur (INk) identifiant une interface par laquelle le paquet sort du réseau de communication (RC) et déduit d'une adresse de destination dans le paquet.

4. - Salve conforme à l'une quelconque des revendications 1 à 3, dans laquelle l'étiquette inclut un identificateur d'un deuxième chemin entre les premier et deuxième noeuds.

5. - Procédé d'assemblage de paquets optiques à transmettre dans un réseau virtuel (VPN1) supporté par un réseau de communication (RC) du type à multiplexage à division de longueur d'onde, caractérisé ce que dans un premier noeud (NES4) par lequel des paquets optiques (Pa, Pb) sont aptes à entrer dans le réseau de communication, il comprend un assemblage des paquets optiques (Pa, Pb) provenant du réseau virtuel dans un champ de paquet (CP) et une construction d'une salve (B1) comprenant le champ de paquet (CP) et une étiquette (LA1) précédant le champ de paquet (CP) et incluant des premières informations (ID_VPN) contribuant à identifier le réseau virtuel et des deuxièmes informations (ID_CH) contribuant à identifier un chemin (NES4-NC1-NC2-NES3) entre le premier noeud et un deuxième noeud (NES3) par lequel les paquets (Pa, Pb) sont aptes à sortir du réseau de communication, les premières et deuxièmes informations étant inchangées pendant la traversée entre les premier et deuxième noeuds du réseau de communication par la salve.

6. - Procédé conforme à la revendication 5, selon lequel les premières informations (ID_VPN) contribuant à identifier le réseau virtuel pour chaque paquet optique (Pa, Pb) reçu par le premier noeud (NES4) sont déduites du passage du paquet à travers une interface respective (IN14) reliée au premier noeud (NES4).

7. - Procédé conforme à la revendication 5, selon lequel les deuxièmes informations (ID_CH) contribuant à identifier un chemin (NES4-NC1-NC2-NES3) entre les premier et deuxième noeuds pour chaque paquet (Pa, Pb) reçu par le premier noeud (NES4) sont déduites d'une adresse de destination lue dans le paquet.

8. - Procédé conforme à la revendication 5, comprenant dans un noeud de coeur (NC1, NC2) du réseau de communication (RC) situé sur le chemin (NES4-NC1-NC2-NES3) entre les premier et deuxième noeuds (NES4, NES3) un stockage optique de la salve (B1), une recherche d'un port de sortie dirigé vers le prochain noeud (NC2, NES3) suivant le chemin en correspondance aux premières et deuxièmes informations (ID_VPN, ID_CH) lues dans l'étiquette (LA1), et un transfert de la salve vers le port de sortie pour l'insérer dans le trafic vers le prochain noeud.

9. - Procédé de désassemblage de paquets à transmettre dans un réseau virtuel (VPN1) supporté par un réseau de communication (RC) du type à multiplexage à division de longueur d'onde, caractérisé ce que, dans un deuxième noeud (NES3) par lequel sont aptes à sortir du réseau de communication des paquets optiques (Pa, Pb) provenant du réseau virtuel suivant un chemin (NES4-NC1-NC2-NES3) depuis un premier noeud (NES4) par lequel les paquets optiques (Pa, Pb) sont aptes à entrer dans le réseau de communication, ledit procédé comprend un désassemblage d'une salve (B1) transmise par le réseau de communication (RC) en des paquets (Pa, Pb) provenant du réseau virtuel et une étiquette (LA1) précédant les paquets et incluant des premières informations (ID_VPN) contribuant à identifier le réseau virtuel et des deuxièmes informations (ID_CH) contribuant à identifier ledit chemin (NES4-NC1-NC2-NES3), les premières et deuxièmes informations étant inchangées pendant la traversée entre les premier et deuxième noeuds du réseau de communication par la salve.

10. - Procédé conforme la revendication 9, comprenant dans le premier noeud (NES4) pour chaque paquet optique (Pa, Pb) à assembler dans la salve (B1) une introduction devant le paquet optique (Pk) d'un identificateur (INk) identifiant une interface par laquelle le paquet optique est apte à sortir du réseau de communication (RC) et déduit d'une adresse de destination dans le paquet, et dans le deuxième noeud (NES3) une recherche des identificateurs des interfaces (IN63, IN73) lus dans la salve en association avec l'identificateur du réseau virtuel (VPN1) pour transférer les paquets via les interfaces.

11. - Noeud (NES4) par lequel des paquets à transmettre dans un réseau virtuel (VPN1) sont aptes à entrer dans un réseau de communication (RC) du type à multiplexage à division de longueur d'onde supportant le réseau virtuel, **caractérisé en ce qu'**il est apte à assembler des paquets optiques (Pa, Pb) provenant du réseau virtuel dans un champ de paquet (CP) et à construire une salve (B1) comprenant le champ de paquet (CP) et une étiquette (LA1) précédant le champ de paquet (CP) et incluant des premières informations (ID_VPN) contribuant à identifier le réseau virtuel et des deuxièmes informations (ID_CH) contribuant à identifier un chemin (NES4-NC1-NC2-NES3) entre ledit noeud et un deuxième noeud (NES3) par lequel les paquets optiques (Pa, Pb) sont aptes à sortir du réseau de communication, les premières et deuxièmes informations étant inchangées pendant la traversée entre les premier et deuxième noeuds du réseau de communication par la salve.

12. - Noeud de coeur (NC1, NC2) par lequel des paquets optiques à transmettre dans un réseau virtuel (VPN1) sont aptes à transiter dans un réseau de communication (RC) du type à multiplexage à division de longueur d'onde supportant le réseau virtuel, **caractérisé en ce qu'**il est apte à stocker optiquement une salve (B1) comprenant un champ de paquet (CP) assemblant des paquets optiques (Pa, Pb) provenant du réseau virtuel et une étiquette (LA1) précédant le champ de paquet (CP) et incluant des premières informations (ID_VPN) contribuant à identifier le réseau virtuel et des deuxièmes informations (ID_CH) contribuant à identifier un chemin (NES4-NC1-NC2-NES3) entre un premier noeud par lequel les paquets (Pa, Pb) sont aptes à entrer dans le réseau de communication et un deuxième noeud (NES3) par lequel les paquets (Pa, Pb) sont aptes à sortir du réseau de communication, les premières et deuxièmes informations étant inchangées pendant la traversée entre les premier et deuxième noeuds du réseau de communication par la salve, à rechercher un port de sortie dirigé vers le prochain noeud (NC2, NES3) suivant le chemin en correspondance aux premières et deuxièmes informations lues dans l'étiquette (LA1), et à transférer la salve vers le port de sortie pour l'insérer dans le trafic vers le prochain noeud.

13. - Noeud (NES3) par lequel des paquets optiques à transmettre dans un réseau virtuel (VPN1) sont aptes à sortir d'un réseau de communication (RC) du type à multiplexage à division de longueur d'onde supportant le réseau virtuel, **caractérisé en ce qu'**il est apte à désassembler en des paquets optiques (Pa, Pb) provenant du réseau virtuel une salve (B1) comprenant un champ de paquet (CP) assemblant les paquets optiques (Pa, Pb) devant chacun (Pk) desquels est introduit un identificateur (INk) identifiant une interface par laquelle le paquet optique est apte à sortir du réseau de communication (RC), et une étiquette (LA1) précédant le champ de paquet (CP) et incluant des premières informations (ID_VPN) contribuant à identifier le réseau virtuel et des deuxièmes informations (ID_CH) contribuant à identifier un chemin (NES4-NC1-NC2-NES3) entre un premier noeud par lequel les paquets optiques (Pa, Pb) sont aptes à entrer dans le réseau de communication et ledit noeud (NES3), et à rechercher des identificateurs des interfaces (IN63, IN73) lus dans la salve en association avec les premières informations pour transférer les paquets optiques via les interfaces.

14. - Programme d'ordinateur comprenant des instructions pour la mise en oeuvre dans un noeud (NES4) selon la revendication 11.

15. - Programme d'ordinateur comprenant des instructions pour la mise en oeuvre dans un noeud de coeur (NC1, NC2) selon la revendication 12.

16. - Programme d'ordinateur comprenant des instructions pour la mise en oeuvre dans un noeud (NES3) selon la revendication 13.

## Patentansprüche

1. Stoß (B1), der optische Pakete (Pa, Pb) vereint, die in einem virtuellen Netz (VPN1) zu übertragen sind, das von einem Kommunikationsnetz (RC) vom Typ mit Wellenlängenmultiplex unterstützt wird, **dadurch gekennzeichnet, dass** er ein Etikett (LA1) umfasst, das Paketfeld (CP) vorangestellt ist, das optische Pakete (Pa, Pb) vereint, die von dem virtuellen Netz kommen und geeignet sind, in das Kommunikationsnetz durch einen ersten Knoten (NES4) einzutreten und aus dem Kommunikationsnetz durch einen zweiten Knoten (NES3) auszutreten, wobei das Etikett erste Informationen (ID_VPN) einschließt, die dazu beitragen, das virtuelle Netz zu identifizieren, und zweite Informationen (ID_CH), die dazu beitragen, einen Weg (NES4-NC1-NC2-NES3) zwischen dem ersten und dem zweiten Konten zu identifizieren, wobei die ersten und zweiten Informationen während des Durchlaufens des Stoßes zwischen dem ersten und dem zweiten Knoten des Kommunikationsnetzes unverändert sind.

2. Stoß nach Anspruch 1, bei dem das Paketfeld ein erstes Unterfeld (CPO) umfasst, das die Anzahl von optischen Paketen, die in dem Paketfeld (CP) eingeschlossen sind, und die Länge des Paketfeldes einschließt.

3. Stoß nach Anspruch 2, bei dem jedem optischen Paket (Pk) in dem Paketfeld (CP) ein Identifikator (INk) vorangestellt ist, der eine Schnittstelle identifiziert, durch die das Paket aus dem Kommunikationsnetz (RC) austritt, und eine Bestimmungsadresse in dem Paket ableitet.

4. Stoß nach einem der Ansprüche 1 bis 3, bei dem das Etikett einen Identifikator eines zweiten Weges zwischen dem ersten und dem zweiten Knoten einschließt.

5. Verfahren zum Vereinen von optischen Paketen, die in einem virtuellen Netz (VPN1) zu übertragen sind, das von einem Kommunikationsnetz (RC) vom Typ mit Wellenlängenmultiplex unterstützt wird, **dadurch gekennzeichnet, dass** es in einem ersten Knoten (NES4), durch den optische Pakete (Pa, Pb) in das Kommunikationsnetz eintreten können, eine Vereinigung von optischen Paketen (Pa, Pb) umfasst, die von dem virtuellen Netz in einem Paketfeld (CP) stammen, und eine Bildung eines Stoßes (B1), umfassend das Paketfeld (CP) und ein Etikett (LA1), das dem Paketfeld (CP) vorangestellt ist und erste Informationen (ID_VPN), die dazu beitragen, das virtuelle Netz zu identifizieren, und zweite Informationen (ID_CH) einschließt, die dazu beitragen, einen Weg (NES4-NC1-NC2-NES3) zwischen dem ersten Knoten und einem zweiten Knoten (NES3) zu identifizieren, durch den die Pakete (Pa, Pb) aus dem Kommunikationsnetz austreten können, wobei die ersten und zweiten Informationen während des Durchlaufens des Stoßes zwischen dem ersten und dem zweiten Knoten des Kommunikationsnetzes unverändert sind.

6. Verfahren nach Anspruch 5, bei dem die ersten Informationen (ID_VPN), die dazu beitragen, das virtuelle Netz für jedes optische Paket (Pa, Pb), das von dem ersten Knoten (NES4) empfangen wird, zu identifizieren, vom Durchlaufen des Pakets durch eine jeweilige Schnittstelle (IN14), die mit dem ersten Knoten (NES4) verbunden ist, abgeleitet werden.

7. Verfahren nach Anspruch 5, bei dem die zweiten Informationen (ID_CH), die dazu beitragen, einen Weg (NES4-NC1-NC2-NES3) zwischen dem ersten und dem zweiten Knoten für jedes Paket (Pa, Pb), das von dem ersten Knoten (NES4) empfangen wird, zu identifizieren, von einer Bestimmungsadresse, die in dem Paket gelesen wird, abgeleitet werden.

8. Verfahren nach Anspruch 5, umfassend in einem zentralen Knoten (NC1, NC2) des Kommunikationsnetzes (RC), der sich auf dem Weg (NES4-NC1-NC2-NES3) zwischen dem ersten und dem zweiten Knoten (NES4, NES3) befindet, eine optische Speicherung des Stoßes (B1), eine Suche eines Austrittspunktes, der zum nächsten Knoten (NC2, NES3) entlang des Weges in Übereinstimmung mit den ersten und zweiten Informationen (ID_VPN, ID_CH), die in dem Etikett (LA1) gelesen werden, gerichtet ist, und eine Weiterleitung des Stoßes zu dem Austrittspunkt, um ihn in den Verkehrsfluss zum nächsten Knoten einzufügen.

9. Verfahren zum Trennen von Paketen, die in einem virtuellen Netz (VPN1) zu übertragen sind, das von einem Kommunikationsnetz (RC) vom Typ mit Wellenlängenmultiplex unterstützt wird, **dadurch gekennzeichnet, dass** in einem zweiten Knoten (NES3), durch den optische Pakete (Pa, Pb) aus dem Kommunikationsnetz austreten können, die von dem virtuellen Netz entlang eines Weges (NES4-NC1-NC2-NES3) von einem ersten Knoten (NES4), durch den die optischen Pakete (Pa, Pb) in das Kommunikationsnetz eintreten können, kommen, das Verfahren eine Trennung eines Stoßes (B1), der von dem Kommunikationsnetz (RC) in Paketen (Pa, Pb), die von dem virtuellen Netz kommen, und ein Etikett (LA1) umfasst, das den Paketen vorangestellt ist und erste Informationen (ID_VPN), die dazu beitragen, das virtuelle Netz zu identifizieren, und zweite Informationen (ID_CH) umfasst, die dazu beitragen, den Weg (NES4-NC1-NC2-NES3) zu identifizieren, wobei die ersten und die zweiten Informationen während des Durchlaufens des Stoßes zwischen dem ersten und dem zweiten Knoten des Kommunikationsnetzes unverändert ist.

10. Verfahren nach Anspruch 9, umfassend in einem ersten Knoten (NES4) für jedes in dem Stoß (B1) zu vereinende optische Paket (Pa, Pb) eine Einführung eines Identifikators (INk) vor dem optischen Paket (Pk), der eine Schnittstelle identifiziert, durch die das optische Paket aus dem Kommunikationsnetz (RC) austreten kann und von einer Bestimmungsadresse in dem Paket abgleitet wird, und in einem zweiten Knoten (NES3) eine Suche nach Identifikatoren der Schnittstellen (IN63, IN73), die in dem Stoß in Verbindung mit dem Identifikator des virtuellen Netzes (VPN1) gelesen wurden, um die Pakete über die Schnittstellen weiterzuleiten.

11. Knoten (NES4), durch den in einem virtuellen Netz (VPN1) zu übertragende Pakete in ein Kommunikationsnetz (RC) vom Typ mit Wellenlängenmultiplex, das das virtuelle Netz unterstützt, eintreten können, **dadurch gekennzeichnet, dass** er optische Pakete (Pa, Pb), die von dem virtuellen Netz kommen, in einem Paketfeld (CP) vereinen und einen Stoß (B1) bilden kann, umfassend das Paketfeld (CP) und ein Etikett (LA1), das dem Paketfeld (CP) vorangestellt ist und erste Informationen (ID_VPN), die dazu beitragen, das virtuelle Netz zu identifizieren, und zweite Informationen (ID_CH) einschließt, die dazu beitragen, einen Weg (NES4-NC1-NC2-NES3) zwischen dem ersten Knoten und einem zweiten Knoten (NES3) zu identifizieren, durch den die optischen Pakete (Pa, Pb) aus dem Kommunikationsnetz austreten können, wobei die ersten und zweiten Informationen während des Durchlaufens des Stoßes zwischen dem ersten und dem zweiten Knoten des Kommunikationsnetzes unverändert sind.

12. Zentraler Knoten (NC1, NC2), durch den in einem virtuellen Netz (VPN1) zu übertragende optische Pakete in ein Kommunikationsnetz (RC) vom Typ mit Wellenlängenmultiplex, das das virtuelle Netz unterstützt, übergehen können, **dadurch gekennzeichnet, dass** er einen Stoß (B1) optisch speichern kann, umfassend ein Paketfeld (CP), das optische Pakete (Pa, Pb) vereint, die von dem virtuellen Netz kommen, und ein Etikett (LA1), das dem Paketfeld (CP) vorangestellt ist und erste Informationen (ID_VPN), die dazu beitragen, das virtuelle Netz zu identifizieren, und zweite Informationen (ID_CH) einschließt, die dazu beitragen, einen Weg (NES4-NC1-NC2-NES3) zwischen einem ersten Knoten, durch den die Pakete (Pa, Pb) in das Kommunikationsnetz eintreten können, und einem zweiten Knoten (NES3) zu identifizieren, durch den die Pakete (Pa, Pb) aus dem Kommunikationsnetz austreten können, wobei die ersten und die zweiten Informationen während des Durchlaufens des Stoßes zwischen dem ersten und dem zweiten Knoten des Kommunikationsnetzes unverändert sind, einen Austrittspunkt suchen kann, der zu dem nächsten Knoten (NC2, NES3) entlang des Weges in Übereinstimmung mit den ersten und zweiten Informationen, die in dem Etikett (LA1) gelesen werden, gerichtet ist, und den Stoß zu dem Austrittspunkt weiterleiten kann, um ihn in den Verkehrsfluss zum nächsten Knoten einzusetzen.

13. Knoten (NES3), durch den in einem virtuellen Netz (VPN1) zu übertragende optische Pakete aus einem Kommunikationsnetz (RC) vom Typ mit Wellenlängenmultiplex austreten können, **dadurch gekennzeichnet, dass** er einen Stoß (B1) in optische Pakete (Pa, PB), die von dem virtuellen Netz kommen, trennen kann, umfassend ein Paketfeld (CP), das die optischen Pakete (Pa, Pb) vereint, vor denen jeweils (Pk) ein Identifikator (INk) eingeführt wird, der eine Schnittstelle identifiziert, durch die das optische Paket aus dem Kommunikationsnetz (RC) austreten kann, und ein Etikett (LA1), das dem Paketfeld (CP) vorangestellt ist und erste Informationen (ID_VPN), die dazu beitragen, das virtuelle Netz zu identifizieren, und zweite Informationen (ID_CH) einschließt, die dazu beitragen, einen Weg (NES4-NC1-NC2-NES3) zwischen einem ersten Knoten, durch den die optischen Pakete (Pa, Pb) in das Kommunikationsnetz eintreten können, und dem zweiten Knoten (NES3) zu identifizieren, und Identifikatoren der Schnittstellen (IN63, IN73) sucht, die in dem Stoß in Verbindung mit den ersten Informationen gelesen wurden, um die optischen Pakete über die Schnittstellen weiterzuleiten.

14. Computerprogramm, umfassend Befehle für den Einsatz in einem Knoten (NES4) nach Anspruch 11, wenn das Programm in dem Knoten ausgeführt wird.

15. Computerprogramm, umfassend Befehle für den Einsatz in einem zentralen Knoten (NC1, NC2) nach Anspruch 12, wenn das Programm in dem Knoten ausgeführt wird.

16. Computerprogramm, umfassend Befehle für den Einsatz in einem Knoten (NES3) nach Anspruch 13, wenn das Programm in dem Knoten ausgeführt wird.

## Claims

1. Burst (B1) assembling optical packets (Pa, Pb) to be transmitted in a virtual network (VPN1) supported by a communication network (RC) of the wavelength division multiplexing type, **characterized in that** it comprises a label (LA1) preceding a packet field (CP) assembling optical packets (Pa, Pb) originating from the virtual network and which can enter into the communication network via a first node (NES4) and leave the communication network via a second node (NES3), said label including first information items (ID_VPN) helping to identify the virtual network and second information items (ID_CH) helping to identify a path (NES4-NC1-NC2-NES3) between the first and second nodes, the first and second information items being unchanged during the crossing between the first and second nodes of the communication network via the burst.

2. Burst according to Claim 1, in which the packet field comprises a first subfield (CPO) including the number of optical packets included in the packet field (CP) and the length of the packet field.

3. Burst according to Claim 2, in which each optical packet (Pk) in the packet field (CP) is preceded by an identifier (INk) identifying an interface via which the packet leaves the communication network (RC) and deduced from a destination address in the packet.

4. Burst according to any one of Claims 1 to 3, in which the label includes an identifier of a second path between the first and second nodes.

5. Method for assembling optical packets to be transmitted in a virtual network (VPN1) supported by a communication network (RC) of the wavelength division multiplexing type, **characterized in that**, in a first node (NES4) via which the optical packets (Pa, Pb) can enter into the communication network, it comprises an assembly of the optical packets (Pa, Pb) originating from the virtual network in a packet field (CP) and a construction of a burst (B1) comprising the packet field (CP) and a label (LA1) preceding the packet field (CP) and including first information items (ID_VPN) helping to identify the virtual network and second information items (ID_CH) helping to identify a path (NES4-NC1-NC2-NES3) between the first node and a second node (NES3) via which the packets (Pa, Pb) can leave the communication network, the first and second information items being unchanged during the crossing between the first and second nodes of the communication network via the burst.

6. Method according to Claim 5, according to which the first information items (ID_VPN) helping to identify the virtual network for each optical packet (Pa, Pb) received by the first node (NES4) are deduced from the passage of the packet through a respective interface (IN14) linked to the first node (NES4).

7. Method according to Claim 5, according to which the second information items (ID_CH) helping to identify a path (NES4-NC1-NC2-NES3) between the first and second nodes for each packet (Pa, Pb) received by the first node (NES4) are deduced from a destination address read in the packet.

8. Method according to Claim 5, comprising, in a core node (NC1, NC2) of the communication network (RC) situated on the path (NES4-NC1-NC2-NES3) between the first and second nodes (NES4, NES3), an optical storage of the burst (B1), a search for an output port directed towards the next node (NC2, NES3) along the path corresponding to the first and second information items (ID_VPN, ID_CH) read in the label (LA1), and a transfer of the burst to the output port to insert it into the traffic to the next node.

9. Method for disassembling packets to be transmitted in a virtual network (VPN1) supported by a communication network (RC) of the wavelength division multiplexing type, **characterized in that**, in a second node (NES3) via which optical packets (Pa, Pb), originating from the virtual network on a path (NES4-NC1-NC2-NES3) from a first node (NES4) via which the optical packets (Pa, Pb) can enter into the communication network, can leave the communication network, said method comprises a disassembly of a burst (B1) transmitted by the communication network (RC) in packets (Pa, Pb) originating from the virtual network and a label (LA1) preceding the packets and including first information items (ID_VPN) helping to identify the virtual network and second information items (ID_CH) helping to identify said path (NES4-NC1-NC2-NES3), the first and second information items being unchanged during the crossing between the first and second nodes of the communication network via the burst.

10. Method according to Claim 9, comprising, in the first node (NES4) for each optical packet (Pa, Pb) to be assembled in the burst (B1), an introduction in front of the optical packet (Pk) of an identifier (INk) identifying an interface via which the optical packet can leave the communication network (RC) and deduced from a destination address in the packet, and in the second node (NES3), a search for the identifiers of the interfaces (IN63, IN73) read in the burst in association with the identifier of the virtual network (VPN1) to transfer the packets via the interfaces.

11. Node (NES4) via which packets to be transmitted in a virtual network (VPN1) can enter into a communication network (RC) of the wavelength division multiplex type supporting the virtual network, **characterized in that** it can assemble optical packets (Pa, Pb) originating from the virtual network in a packet field (CP) and construct a burst (B1) comprising the packet field (CP) and a label (LA1) preceding the packet field (CP) and including first information items (ID_VPN) helping to identify the virtual network and second information items (ID_CH) helping to identify a path (NES4-NC1-NC2-NES3) between said node and a second node (NES3) via which the optical packets (Pa, Pb) can leave the communication network, the first and second information items being unchanged during the crossing between the first and second nodes of the communication network via the burst.

12. Core node (NC1, NC2) via which optical packets to be transmitted in a virtual network (VPN1) can cross into a communication network (RC) of the wavelength division multiplexing type supporting the virtual network, **characterized in that** it can optically store a burst (B1) comprising a packet field (CP) assembling optical packets (Pa, Pb) originating from the virtual network and a label (LA1) preceding the packet field (CP) and including first information items (ID_VPN) helping to identify the virtual network and second
, information items (ID_CH) helping to identify a path (NES4-NC1-NC2-NES3) between a first node via which the packets (Pa, Pb) can enter into the communication network and a second node (NES3) via which the packets (Pa, Pb) can leave the communication network, the first and second information items being unchanged during the crossing between the first and second nodes of the communication network via the burst, search for an output port directed towards the next node (NC2, NES3) along the path corresponding to the first and second information items read in the label (LA1), and transfer the burst to the output port to insert it into the traffic to the next node.

13. Node (NES3) via which optical packets to be transmitted in a virtual network (VPN1) can leave a communication network (RC) of the wavelength division multiplexing type supporting the virtual network, **characterized in that** it can disassemble, into optical packets (Pa, Pb) originating from the virtual network, a burst (B1) comprising a packet field (CP) assembling the optical packets (Pa, Pb) in front of each (Pk) of which is introduced an identifier (INk) identifying an interface via which the optical packet can leave the communication network (RC), and a label (LA1) preceding the packet field (CP) and including first information items (ID_VPN) helping to identify the virtual network and second information items (ID_CH) helping to identify a path (NES4-NC1-NC2-NES3) between a first node via which the optical packets (Pa, Pb) can enter into the communication network and said node (NES3), and search for the identifiers of the interfaces (IN63, IN73) read in the burst in association with the first information items to transfer the optical packets via the interfaces.

14. Computer program comprising instructions for implementation in a node (NES4) according to Claim 11, when the program is run in said node.

15. Computer program comprising instructions for implementation in a core node (NC1, NC2) according to Claim 12, when the program is run in said core node.

16. Computer program comprising instructions for implementation in a node (NES3) according to Claim 13, when the program is run in said node.
